# EUROPÄISCHE PATENTSCHRIFT

(11) **EP 0 838 569 B1**
(45) Veröffentlichungstag und Bekanntmachung des Hinweises auf die Patenterteilung: **22.09.2004**
(21) Anmeldenummer: 97117848.8
(22) Anmeldetag: 15.10.1997
(51) Int. Cl.: E05B 49/00, B60R 25/04

(54) **Elektronischer Fahrzeugschlüssel**
Electronic key for vehicle
Clé électronique pour véhicule

(30) Priorität: 23.10.1996 DE 19643759
(43) Veröffentlichungstag der Anmeldung: 29.04.1998
(73) Patentinhaber: DaimlerChrysler AG, 70567 Stuttgart (DE)
(72) Erfinder: Brinkmeyer, Horst, Dr., 71336 Waiblingen (DE); Nagel, Gerhard, 71154 Nufringen (DE); Rick, Thomas, 71522 Backnang (DE); Schwegler, Günter, 71384 Weinstadt (DE); Setzer, Jürgen, 75428 Illingen (DE)

(56) Entgegenhaltungen:
- EP-A- 0 628 928
- WO-A-93/14571
- DE-A- 4 415 052
- DE-C- 4 409 166
- DE-C- 19 513 498
- US-A- 3 921 875
- US-A- 4 159 467

## Beschreibung

Die Erfindung betrifft einen elektronischen Fahrzeugschlüssel mit Fahrzeug-Kommunikationseinrichtung gemäß dem Oberbegriff des Anspruchs 1.

Die DE 195 13 498 C1 beschreibt einen gattungsgemäßen elektronischen Fahrzeugschlüssel, welcher Teil eines Fahrzeugsicherungssystems ist, bei welchem eine Wegfahrsperre im Fahrzeug aktiviert wird, wenn eine fahrzeugseitige Fahrzeug-Kommunikationseinrichtung keine Nutzungsfreigabedaten mehr von einer in dem elektronischen Fahrzeugschlüssel angeordneten Schlüssel-Kommunikationseinrichtung empfängt. Die Abgabe der Nutzungsfreigabedaten durch den Fahrzeugschlüssel ist an den regelmäßigen Empfang von nutzungsfreigebenden Funkrufinformationen, welche von einer Zentrale ausgesendet werden und von einer Funkempfangseinrichtung im Fahrzeugschlüssel empfangen und decodiert werden, gekoppelt.

Als nachteilig könnte dabei angesehen werden, daß unter ungünstigen Umständen, wenn die nutzungsfreigebenden Funkrufinformationen nicht mehr empfangen werden können, die Wegfahrsperre ungewollt aktiviert werden könnte, und daß sich die Funkempfangseinrichtung im Fahrzeugschlüssel immer in einem aktiven Zustand befindet und ständig Leistung aufnimmt.

Ferner offenbart die DE 44 15 052 A1 ein Fahrzeugsicherungssystem, bei dem im Fahrzeug eine Steuerungseinrichtung mit einer Funksende- und Funkempfangseinrichtung für ein Mobilfunknetz vorgesehen ist, wobei die Steuerungseinrichtung mit einer fahrzeugseitigen Wegfahrsperre verbunden ist und von Zeit zu Zeit eine Meldung über das Mobilfunknetz an eine Zentralstelle sendet. Die Steuerungseinrichtung aktiviert die Wegfahrsperre, wenn nach einer bestimmten Anzahl von Betriebsereignissen das Fahrzeug keine nutzungsfreigebenden Funkrufinformationen von der Zentralstelle empfangen hat.

Des weiteren ist aus der WO 93 14571 A ein Sicherheitszugangssystem bekannt, das auch für Kraftfahrzeuge einsetzbar ist. Bei diesem bekannten System wird über eine Funkverbindung zwischen einer Zentrale und einem elektronischen Schlüssel die Betätigung des zugehörigen Schlosses für einen vorgegebenen Zeitraum oder bis zu einem bestimmten Zeitpunkt freigeschaltet, nachdem zwischen dem den Zugang wünschenden Nutzer und der Zentrale eine erfolgreiche Authentikation durchgeführt wurde. Vor der Betätigung des Schlosses mit dem von dem Nutzer mitgeführten elektronischen Schlüssel erfolgt eine Identifizierung des Nutzers, bspw. durch Eingabe einer PIN-Nummer mittels einer am Schlüssel angeordneten Tastatur.

Schließlich beschreibt die DE 44 09 166 C eine Zugangs-Kontrollvorrichtung zur Kontrolle des Zugangs zu verschieden kostenpflichtigen Sperrbereichen mit einem Kraftfahrzeug. Hierzu trägt der Fahrer eine Chipkarte, die über eine stationäre Steuereinheit am Wegrand und ein Steuergerät im Kraftfahrzeug zur Durchführung einer Authentikation abgefragt wird. Liegt eine Zugangsberechtigung vor, wird an die Chipkarte von der stationären Steuereinheit eine Abbuchungsaufforderung gesendet mit der Folge, dass ein bestimmter Geldbetrag von einem Guthabenspeicher auf der Chipkarte abgebucht wird. Diese Chipkarte dient also sowohl zur Authentikation des Fahrers, der den Zugang mit seinem Fahrzeug zu einem Sperrbereich wünscht, als auch als Zahlungsmittel.

Aufgabe der Erfindung ist es, einen gattungsgemäßen Gegenstand der eingangs genannten Art so weiterzubilden, daß eine ungewollte Aktivierung einer elektronischen Wegfahrsperre im Fahrzeug so gut wie ausgeschlossen wird.

Diese Aufgabe wird erfindungsgemäß mit den Merkmalen des Anspruchs 1 gelöst, wobei die Merkmale der Unteransprüche vorteilhafte Ausgestaltungen und Weiterbildungen kennzeichnen.

Erfindungsgemäß wird die gestellte Aufgabe dadurch gelöst, daß in einem gattungsgemäßen Gegenstand die Merkmale gemäß Anspruch 1 vorgesehen sind.

Die von der Zentrale ausgesandten Funkrufinformationen werden dabei in einer kodierten Form übertragen und von der Schlüssel-Steuerungseinrichtung dekodiert und überprüft. Für die Kodierung bzw. die Dekodierung der Funkrufinformationen können verschiedene hinlänglich bekannte Verfahren angewendet werden, auf welche hier nicht näher eingegangen wird.

Das "Guthaben" auf dem Mobilitätskonto kann beispielsweise durch einen Zähler, der ereignisgesteuert herunterzählt und der immer bei Empfang der nutzungsfreigebenden Funkrufinformationen von der Schlüssel-Steuerungseinrichtung auf ein "Max-Guthaben" hochgesetzt wird, realisiert werden. Bei den relevanten Ereignissen, welche als "Abbuchungen" bearbeitet werden und durch die der Zähler herunterzählt, bzw. das "Guthaben" verkleinert wird, kann es sich beispielsweise um Motorstarten, Türöffnen, Tanken oder Fahren einer vorgegebenen Strecke handeln. Das Fahrzeug übermittelt der Schlüssel-Steuerungseinrichtung über die Fahrzeug-Kommunikationseinrichtung und die Schlüssel-Kommunikationseinrichtung die relevanten Ereignisse zum aktualisieren des "Guthabens" auf dem Mobilitätskonto. So kann beispielsweise die nutzungsfreigebende Funkrufinformation die Berechtigung für 10 Motorstarts enthalten. Dieser Wert (10 Motorstarts) wird als "Max-Guthaben" auf dem Mobilitätskonto verbucht. Jeder Motorstart wird dann als relevantes Ereignis bzw. "Abbuchung" von dem "Guthaben" auf dem Mobilitätskonto bearbeitet und das "Guthaben" auf dem Mobilitätskonto wird dann bei jedem Motorstart um einen Motorstart dekrementiert. Zudem sind beliebige logische Kombinationen von relevanten Ereignissen denkbar. So kann beispielsweise die Nutzung durch die Anzahl von Motorstarts und das Zurücklegen einer bestimmten Fahrstrecke (z. B. 100 Kilometer werden als "Max-Guthaben" verbucht) begrenzt werden. Erreicht das "Guthaben" auf dem Mobilitätskonto den Kontostand "Null", so kann eine fahrzeugseitige Wegfahrsperre aktiviert und ein weiterer Betrieb des Fahrzeugs verhindert werden bzw. eine erneute Deaktivierung der fahrzeugseitigen Wegfahrsperre bei der nächsten Inbetriebnahme des Fahrzeugs gesperrt werden. Bei einer berechtigten Nutzung werden von der Funkempfangseinrichtung regelmäßig hützungsfreigebende Funkrufinformationen empfangen, welche das "Guthaben" auf dem Mobilitätskonto immer wieder auf das "Max-Guthaben" hochsetzen. Dadurch wird verhindert, daß der Kontostand "Null" erreicht wird. Das "Max-Guthaben" sollte so groß gewählt werden, daß "Funklöcher" problemlos durchfahren werden können, gleichzeitig aber der Aktionsradius des Fahrzeugs so eingeschränkt wird, daß im Falle einer unberechtigten Nutzung das Fahrzeug nicht zu weit entfernt werden kann. Zudem besteht die Möglichkeit, daß ein berechtigter Nutzer bei der Zentrale ein größeres "Max-Guthaben" anfordern kann, bzw. daß er ein sofortiges Aussenden von nutzungsfreigebenden Funkrufinformationen anfordern kann, wenn ihm beispielsweise bekannt ist, daß er ein großes Gebiet durchfahren muß in dem keine Funkrufinformationen empfangen werden können.

Desweiteren kann gemäß einer vorteilhaften Weiterbildung die nutzungsfreigebende Funkrufinformation als "Max-Guthaben" ein vorgegebenes Zeitintervall enthalten. Das Mobiltätskonto führt dann eine Stopuhrfunktion aus, wobei wie bereits beschrieben die nutzungsfreigebenden Funkrufinformationen, beispielsweise Nutzungsfreigabe für 6 Stunden, als "Max-Guthaben" auf das Mobilitätskonto gebucht werden, von welchem dann während einer Fahrzeugnutzung in vorgegebenen Intervallen, welche als relevante Ereignisse betrachtet werden, "abgebucht" wird. Dabei ist es vorstellbar, einen notwendigen Zeitgeber in das Mobilitätskonto zu integrieren, so daß die "Abbuchungen" vom "Guthaben" auf dem Mobilitätskonto automatisch im Mobilitätskonto durchgeführt werden, wobei die Schlüssel-Steuerungseinrichtung nur regelmäßig den Kontostand des "Guthabens" auf dem Mobilitätskonto überprüft oder wobei das Mobilitätskonto bei Erreichen von bestimmten Kontoständen die Schlüssel-Steuerungseinrichtung informiert.

Es ist aber auch denkbar den Zeitgeber an einer anderen Stelle im Fahrzeugschlüssel oder im Fahrzeug zu integrieren oder einen bereits im Fahrzeug vorhandenen Zeitgeber zu benutzen. Der Zeitgeber übermittelt dann seine Zeitinformation an die Schlüssel-Steuerungseinrichtung. Das "Guthaben" auf dem Mobilitätskonto wird dann in regelmäßigen Abständen (beispielsweise alle 10 Minuten), durch die Schlüssel-Steuerungseinrichtung dekrementiert. Wenn das Guthaben auf dem Mobilitätskonto den Kontostand "Null" erreicht hat wird der weitere Betrieb des Fahrzeugs bzw. eine erneute Inbetriebnahme des Fahrzeugs verhindert.

Bei einer weiteren Ausführungsform kann ein bestimmter Zeitpunkt, beispielsweise eine bestimmte Uhrzeit, gegebenenfalls in Verbindung mit einem bestimmten Datum, als "Max-Guthaben" auf dem Mobilitätskonto verbucht werden. Die Schlüssel-Steuerungseinrichtung vergleicht dann regelmäßig eine die aktuelle Uhrzeit repräsentierende Zeitinformation von einem Zeitgeber mit dem als "Max-Guthaben" auf dem Moblitätskonto verbuchten Zeitpunkt. Ist der als "Max-Guthaben" auf dem Mobilitätskonto abgelegte Zeitpunkt überschritten, dann wird der weitere Betrieb des Fahrzeugs bzw. eine erneute Inbetriebnahme des Fahrzeugs wie bereits beschrieben verhindert. Bei dieser Ausführungsform findet keine "Abbuchung" vom "Guthaben" auf dem Mobilitätskonto statt. Als "Guthaben" kann bei dieser Ausführungsform des Mobilitätskontos der zeitliche Abstand zwischen dem bestimmten Zeitpunkt und der aktuellen Uhrzeit aufgefaßt werden. Unter dem Min-Kontostand wird dann ein bestimmter minimaler zeitlicher Abstand, beispielsweise 30 Minuten, verstanden. Der Kontostand "Null" ist dann erreicht, wenn die aktuelle Uhrzeit dem bestimmten als "Max-Guthaben" verbuchten Zeitpunkt entspricht. Diese Ausführungsform des Mobilitätskontos kann mit der bereits beschriebenen Ausführungsform des Mobilitätskontos kombiniert werden und eignet sich besonders für Fahrzeugvermietsysteme, bei welchen ein Nutzer das Fahrzeug nur für eine bestimmte Zeitdauer, beispielsweise drei Tage, mietet. Als "Max-Guthaben" auf dem Mobilitätskonto werden dann das Datum und die Uhrzeit des Ablaufs des Mietvertrages verbucht. Möchte ein Nutzer den Mietvertrag verlängern, so muß er sich nur mit dem Vermieter in Verbindung setzen und dieser übermittelt dann als nutzungsfreigebende Funkrufinformation das neue Ablaufdatum als "Max-Guthaben" an das Mobilitätskonto im Fahrzeugschlüssel.

Zudem ist es vorstellbar, in der Schlüssel-Steuerungseinrichtung ein festes "Max-Guthaben" abzulegen, welches bei jedem Empfang der an den Fahrzeugschlüssel gesandten nutzungsfreigebenden Funkrufinformationen auf das Mobilitätskonto gebucht wird. So kann das "Max-Guthaben" beispielsweise durch 10 Motorstarts gekennzeichnet sein. Auf diese Weise kann die Erfindung relativ einfach realisiert werden, da nur eine Art von relevanten Ereignissen berücksichtigt werden muß.

Ein Vorteil der erfindungsgemäßen Lösung besteht darin, daß durch das "Guthaben" auf dem Mobilitätskonto auch in Gebieten in denen die Funkrufinformationen nicht empfangen werden können, - beispielsweise in sogenannten Funklöchern - eine Deaktivierung der Wegfahrsperre bei der Inbetriebnahme des Fahrzeugs durch einen berechtigten Nutzer möglich ist, bzw. eine Aktivierung der Wegfahrsperre während des Betriebs des Fahrzeugs durch den berechtigten Nutzer verhindert wird.

Die Anordnung des Mobilitätskontos im Fahrzeugschlüssel und nicht im Fahrzeug hat den zusätzlichen Vorteil, daß bei Systemanpassungen, beispielsweise wegen unterschiedlichen (länderspezifischen) Ausführungen des Funkrufdienstes, nur Änderungen im Fahrzeugschlüssel vorgenommen werden müssen, hingegen die Einrichtung im Fahrzeug unverändert bleibt.

Bei einer Ausführungsform der Erfindung kann, wenn das "Guthaben" auf dem Mobilitätskonto den Kontostand "Null" erreicht hat, unabhängig davon ob das zugehörige Fahrzeug gerade betrieben wird oder nicht, eine erneute Inbetriebnahme des Fahrzeugs dadurch verhindert werden, daß vom Fahrzeugschlüssel keine Daten, welche zum Deaktivieren der fahrzeugseitigen Wegfahrsperre notwendig sind, an das Fahrzeug übertragen werden. Eine Aktivierung der fahrzeugseitigen Wegfahrsperre während des Fahrzeugbetriebs ist bei dieser Ausführungsform nicht möglich. Durch diese Maßnahme wird ein Gefährdung des fließenden Verkehrs nahezu ausgeschlossen, da die Wegfahrsperre erst nach dem Betrieb des Fahrzeugs, beispielsweise durch Abziehen des Fahrzeugschlüssels aus dem Zündschloß, aktiviert wird.

Bei einer anderen Ausführungsform kann, wenn das "Guthaben" auf dem Mobilitätskonto den Kontostand "Null" während des Fahrzeugbetriebs erreicht, der Fahrzeugbetrieb, wenn eine Verkehrsgefährdung, beispielsweise bei einem Ampelhalt, ausgeschlossen ist, sofort abgebrochen werden. Diese Maßnahme hat den Vorteil, daß nach einer erkannten unberechtigten Nutzung, das Fahrzeug nicht mehr selbsttätig weiterbewegt werden kann.

Für die Kommunikation zwischen dem elektronischen Fahrzeugschlüssel und dem zugehörigen Fahrzeug mittels der Schlüssel-Kommunikationseinrichtung und der Fahrzeug-Kommunikationseinrichtung zur Deaktivierung bzw. zur Aktivierung der fahrzeugseitigen Wegfahrsperre können verschiedene bekannte Verfahren angewendet werden. So überträgt bei einem ersten Verfahren die Schlüssel-Steuerungseinrichtung während des Fahrzeugbetriebs, solange das "Guthaben" im Mobilitätskonto noch nicht den Kontostand "Null" erreicht hat, regelmäßig ein Nutzungsfreigabesignal an das zugehörige Fahrzeug. Wird der Kontostand "Null" erreicht, so wird das Nutzungsfreigabesignal nicht mehr übertragen und die fahrzeugseitige Wegfahrsperre wird aktiviert bzw. eine erneute Deaktivierung der Wegfahrsperre bei der nächsten Inbetriebnahme wird verhindert.

Bei einem zweiten Verfahren überträgt die Schlüssel-Steuerungseinrichtung ein Nutzungssperrsignal an das Fahrzeug, wenn das "Guthaben" auf dem Mobilitätskonto den Kontostand "Null" erreicht hat, wodurch die fahrzeugseitige Wegfahrsperre aktiviert wird bzw. eine erneute Deaktivierung der Wegfahrsperre bei der nächsten Inbetriebnahme verhindert wird.

Außerdem kann durch die Zentrale im Falle eines Fahrzeugschlüsselverlustes oder bei Diebstahl des Fahrzeugschlüssels oder wenn der Benutzer gezwungen wird den Fahrzeugschlüssel einem unberechtigten Nutzer zu übergeben ein nutzungssperrendes Funkrufsignal an den betroffenen Fahrzeugschlüssel gesendet werden, durch welches die Wegfahrsperre im Fahrzeug aktiviert bzw. die Deaktivierung der Wegfahrsperre verhindert wird, auch wenn das "Guthaben" auf dem Mobilitätskonto in dem betroffenen Fahrzeugschlüssel noch nicht den Kontostand "Null" erreicht hat.

Um die Deaktivierung der Wegfahrsperre bei der Inbetriebnahme des zugehörigen Fahrzeugs zu verhindern, kann beispielsweise eine Sperrung der Schlüssel-Kommunikationseinrichtung durch die Schlüssel-Steuerungseinrichtung vorgesehen werden, um eine Kommunikation zwischen dem Fahrzeugschlüssel und dem zugehörigen Fahrzeug zu verhindern. Dadurch kann nicht nur die Deaktivierung der Wegfahrsperre verhindert werden, sondern auch eine Ansteuerung von anderen Fahrzeugbaugruppen, wie beispielsweise einer Zentralverriegelung, einer Komfortschließung usw., verhindert werden.

Zudem können optische und/oder akustische Anzeigemittel vorgesehen werden, welche wenn das "Guthaben" auf dem Mobilitätskonto einen vorgegebenen Min-Kontostand erreicht oder unterschreitet, beispielsweise wenn das "Guthaben" auf dem Mobilitätskonto nur noch vier relevante Ereignisse oder nur noch 30 Minuten Nutzungsdauer umfaßt, einen Nutzer darüber informieren, daß das "Guthaben" auf dem Mobilitätskonto beinahe aufgebraucht ist. Diese Anzeigemittel können sowohl im Fahrzeugschlüssel, als auch im Fahrzeug vorgesehen werden.

Bei einer vorteilhaften Ausgestaltung der Erfindung wird die Funkempfangseinrichtung nur bei Bedarf von der Schlüssel-Steuerungseinrichtung aktiviert. Dadurch wird die Leistungsaufnahme des elektronischen Fahrzeugschlüssels minimiert.

Bei einer besonders vorteilhaften Ausgestaltung der Erfindung aktiviert die Schlüssel-Steuerungseinrichtung in Abhängigkeit von einem vorgegebenen "Guthaben" auf dem Mobilitätskonto, beispielsweise dem Min-Kontostand, die Funkempfangseinrichtung, damit neue nutzungsfreigebende Funkinformationen empfangen werden können, um das "Guthaben" auf dem Mobilitätskonto wieder auf das "Max-Guthaben" aufzufüllen. Nach Empfang der neuen nutzungsfreigebenden Funkrufinformationen deaktivert die Schlüssel-Steuerungseinrichtung die Funkempfangseinrichtung wieder. Dadurch wird die Spannungsversorgung des Fahrzeugschlüssels geschont. Selbstverständlich werden nutzungsfreigebende Funkinformationen von der Zentrale nur ausgesendet, wenn eine berechtigte Nutzung des Fahrzeugs vorliegt.

Zudem besteht die Möglichkeit, daß die Schlüssel-Steuerungseinrichtung unabhängig vom Kontostand des "Guthabens" auf dem Mobilitätskonto regelmäßig die Funkempfangseinrichtung aktiviert, um festzustellen ob in einem Aufenthaltsraum in dem sich das Fahrzeug gerade befindet überhaupt Funkrufinformationen, welche nicht an den zu dieser Funkempfangseinrichtung gehörenden Fahrzeugschlüssel gerichtet sein müssen, empfangen werden können. Empfängt die Funkempfangseinrichtung keine Funkrufinformationen, beispielsweise in sogenannten "Funklöchern", so kann der Nutzer durch die Anzeigemittel darüber informiert werden und die Funkempfangseinrichtung bleibt solange aktiviert, bis wieder Funkrufinformationen empfangen werden können.

Desweiteren ist es vorstellbar, daß ein Fahrzeughersteller einen bestimmten Funkkanal anmietet über den die nutzungsfreigebenden Funkrufinformationen für alle Fahrzeuge des Herstellers übertragen werden. Die Übertragung der nutzungsfreigebenden Funkrufinformationen kann dabei in einer bestimmten Reihenfolge und/oder zu einer bestimmten Uhrzeit durchgeführt werden. Die Schlüssel-Steuerungseinrichtung weiß dann, wann die Funkempfangseinrichtung aktiviert werden muß um die nutzungsfreigebenden Funkrufinformationen zu empfangen um den Betrieb des Fahrzeugs zu ermöglichen.

Die Reservierung von einem bestimmten Funkkanal bietet sich besonders für Fahrzeugvermietsysteme an, da dort nur eine bestimmte verhältnismäßig kleine Anzahl von Fahrzeugen durch die Zentrale betreut werden müssen. So kann ein Vermieter beispielsweise einen bestimmten Funkkanal täglich von 14.00 Uhr bis 15.00 Uhr gemietet haben. In diesem Zeitraum werden dann die nutzungsfreigebenden Funkrufinformationen für die Fahrzeuge des Vermieters in einer bestimmten Reihenfolge gesendet. Die Schlüssel-Steuerungseinrichtungen aktivieren dann ihre Funkempfangseinrichtungen immer um 14.00 Uhr um die nutzungsfreigebenden Funkrufinformationen zu empfangen und auszuwerten.

Als Nachrichtenwege für die Übertragung der Funkrufinformationen bieten sich besonders bereits vorhandene Systeme wie Funkrufdienste über terrestrische Sender oder über Satelliten an. Zudem können auch vorhandene Mobilfunknetze verwendet werden.

Zusätzlich können die erwähnten optischen und/oder akustischen Anzeigemittel im Fahrzeugschlüssel zur Anzeige einer persönlichen Funkrufnachricht genutzt werden, gegebenenfalls können zur Anzeige der persönlichen Funkrufnachricht optische und/oder akustische Anzeigeelementen im Fahrzeug benutzt werden. Die akustischen Anzeigemittel können dabei als Sprachausgabemittel ausgebildet sein.

Im folgenden werden in der Zeichnung dargestellte Ausführungsbeispiele der Erfindung erläutert; es zeigen:
- Fig. 1: ein Fahrzeugsicherungssystem in schematischer Darstellung;
- Fig. 2: ein Blockschaltbild von relevanten Baugruppen im elektronischen Fahrzeugschlüssel und im Fahrzeug;

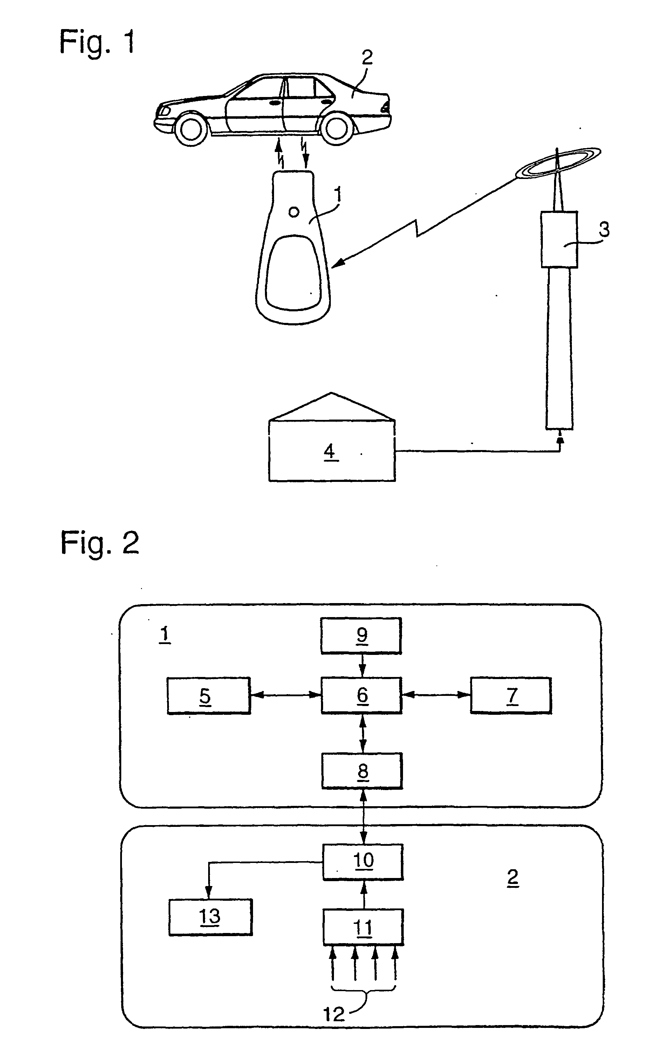

In Fig. 1 sind die Komponenten zur Übertragung von Funkrufinformationen von einer Zentrale 4 über einen terrestrischen Sender 3 zu einem elektronischen Fahrzeugschlüssel 1 dargestellt, wobei der elektronische Fahrzeugschlüssel 1 für eine bidirektionale Datenkommunikation mit einem zugehörigen Fahrzeug 2 ausgelegt ist. Anstatt des terrestrischen Senders 3 kann zur Übertragung der Funkrufinformationen von der Zentrale 4 zu einem elektronischen Fahrzeugschlüssel auch ein Satellitensystem verwendet werden.

Wie aus Fig. 2 ersichtlich ist, umfaßt das Fahrzeugsicherungssystem einen tragbaren elektronischen Fahrzeugschlüssel 1 mit einer Funkempfangseinrichtung 5, einer Schlüssel-Steuerungseinrichtung 6, einem Mobilitätskonto 7, einer ersten Erkennungseinrichtung 9, welche beispielsweise als Zeitgeber ausgebildet ist, und eine Schlüssel-Kommunikationseinrichtung 8, sowie ein zugehöriges Fahrzeug 2 mit einer Fahrzeug-Kommunikationseinrichtung 10, einer zweiten Erkennungseinrichtung 11, welche über Informationseingänge 12 verfügt, über die der Erkennungseinrichtung 11 beispielsweise der aktuelle Kilometerstand, das Datum, die aktuelle Uhrzeit und andere Informationen zur Auswertung bzw. Weiterverarbeitung übergeben werden, und einer elektronischen Wegfahrsperre 13.

Es ergibt sich folgende Funktionsweise:

Die Funkempfangseinrichtung 5 empfängt Funkrufinformationen, welche von einer Zentrale 4 ausgesendet werden, wobei nutzungsfreigebende Funkrufinformationen von der Schlüssel-Steuerungseinrichtung 6 dekodiert, geprüft und als "Guthaben" auf dem Mobilitätskonto 7 verbucht werden. Bei den nutzungsfreigebenden Funkrufinformationen können beispielsweise eine festgelegte Anzahl von Motorstarts (beispielsweise 10 Motorstarts), eine bestimmte erlaubte Nutzungsdauer (beispielsweise 24 Stunden), eine Nutzung bis zu einem bestimmten Zeitpunkt (beispielsweise Nutzung bis zum 23.11.1996 12.00 Uhr) oder eine bestimmte erlaubte Fahrstrecke (beispielsweise 100 Kilometer) an die Funkempfangseinrichtung 5 im elektronischen Fahrzeugschlüssel 1 übertragen werden.

Zur Inbetriebnahme des Fahrzeugs 2 kann die fahrzeugseitige elektronische Wegfahrsperre 13 nur deaktiviert werden, wenn bei einer Kommunikation zwischen der Schlüssel-Kommunikationseinrichtung 8 und der Fahrzeug-Kommunikationseinrichtung 10 ein berechtigter Nutzer erkannt wurde und wenn die Schlüssel-Steuerungseinrichung 6 bei einer Überprüfung des "Guthabens" auf dem Mobilitätskonto 7 feststellt, daß der Kontostand "Null" noch nicht erreicht wurde. Bei der Kommunikation zwischen der Schlüssel-Kommunikationseinrichtung 8 und der Fahrzeug-Kommunikationseinrichtung 10 zur Feststellung ob ein berechtigter Nutzer das Fahrzeug in Betrieb nehmen will, können beliebige aus dem Stand der Technik bekannte Verfahren verwendet werden, auf die hier nicht näher eingegangen wird.

Während des Betriebs des Fahrzeugs 2 erhält die Schlüssel-Steuerungseinrichtung 6 von der ersten und/oder zweiten Erkennungseinrichtung 9; 11 regelmäßig Informationen über relevante Ereignisse, welche als "Abbuchungen" auf dem Mobilitätskonto 7 verbucht werden. Nach der "Abbuchung" überprüft die Schlüssel-Steuerungseinrichtung 6, ob das neue "Guthaben" auf dem Mobiltätskonto 7 einem Min-Kontostand entspricht, oder ob der Kontostand "Null" vorliegt oder ob ein vorgegebener Zeitpunkt überschritten wurde. Wurde der Min-Kontostand erreicht, wird dies dem Nutzer über optische und/oder akustische Anzeigemittel mitgeteilt. Gleichzeitig aktiviert die Schlüssel-Steuerungseinrichtung 6 die Funkempfangseinrichtung 5, damit neue nutzungsfreigebende Funkrufinformationen empfangen werden können. Wird während des Fahrzeugbetriebs der Kontostand "Null" erreicht bzw. wird ein vorgegebener Zeitpunkt überschritten, so wird dies über die Schlüssel-Kommunikationseinrichtung 8 und die Fahrzeug-Kommunikationseinrichtung 10 dem Fahrzeug 2 übermittelt, wodurch die fahrzeugseitige elektronische Wegfahrsperre 13 in der Weise aktiviert wird, daß eine Gefährdung des Verkehrs nahezu ausgeschlossen ist und ein weiterer Betrieb des Fahrzeugs 2 verhindert wird. Wird während einer Betriebspause der Kontostand "Null" erreicht bzw. wird der vorgegebene Zeitpunkt überschritten, so wird bei dem Versuch der erneuten Inbetriebnahme des Fahrzeugs die Deaktivierung der elektronischen Wegfahrsperre 13 verhindert. Dies kann beispielsweise dadurch realisiert werden, daß die Schlüssel-Kommunikationseinrichtung 8 durch die Schlüssel-Steuerungseinrichtung 6 blockiert wird.

Die Aktivierung der elektronischen Wegfahrsperre 13 bzw. die Verhinderung der Deaktivierung der Wegfahrsperre 13 bei der Inbetriebnahme kann aber auch durch eine von der Zentrale 4 ausgesendete nutzungssperrende Funkrufinformation bewirkt werden. Dabei bleibt das "Guthaben" auf dem Mobilitätskonto 7 unberücksichtigt. Diese nutzungssperrende Funkrufinformation wird von der Zentrale 4 auf Anforderung durch einen berechtigten Nutzer, wenn dieser beispielsweise den elektronischen Fahrzeugschlüssel 1 verloren hat, oder wenn er gezwungen wurde den elektronischen Fahrzeugschlüssel 1 einem unberechtigten Nutzer zu übergeben, ausgesendet.

Während des Betriebs des Fahrzeugs 2 aktiviert die Schlüssel-Steuerungseinrichtung 6 die Funkempfangseinrichtung 5 außer bei Erreichen des Min-Kontostandes auch regelmäßig nach Ablauf eines bestimmten Zeitintervalls (beispielsweise alle 60 Minuten), wobei durch die Schlüssel-Steuerungseinrichtung 6 überprüft wird, ob in dem derzeitigen Aufenthaltsraum überhaupt Funkrufinformationen empfangen werden können. Ist dies nicht der Fall, wird der Nutzer über die optische und/oder akustische Anzeigeeinrichtung darüber informiert. Gleichzeitig bleibt die Funkempfangseinrichtung 5 solange aktiviert, bis wieder Funkrufinformationen empfangen werden können. Diese Funkrufinformationen müssen nicht an das betreffende Fahrzeug 2 adressiert sein, denn es geht nur um die Feststellung ob ein sogenanntes "Funkloch" durchfahren wird oder nicht.

## Patentansprüche

1. Elektronischer Fahrzeugschlüssel (1) mit Fahrzeug-Kommunikationseinrichtung (10), wobei der elektronische Fahrzeugschlüssel mit
- einer Funkempfangseinrichtung (5) zum Empfang von Funkrufinformationen, welche von einer Zentrale (4) ausgesandt werden,
- einer Schlüssel-Kommunikationseinrichtung (8) zur Kommunikation mit der Fahrzeug-Kommunikationseinrichtung (10) in dem zugehörigen Fahrzeug (2) vorgesehen ist,
wobei in dem elektronischen Fahrzeugschlüssel (1) eine Schlüssel-Steuerungseinrichtung (6) vorgesehen ist, welche ein Mobilitätskonto (7) führt, wobei von der zentrale (4) ausgesandte nutzungsfreigebende Funkrufinformationen als ein "Max-Guthaben" auf dem Mobilitätskonto (7) verbucht werden, und wobei relevante Ereignisse als eine "Abbuchung" auf dem Mobilitätskonto (7) verbucht werden
**dadurch gekennzeichnet,**
**dass** die von der Schlüssel-Kommunikationseinrichtung (8) an die Fahrzeug-Kommunikationseinrichtung (10) ausgesandten Signale zum Aktivieren oder Deaktivieren einer fahrzeugseitigen Wegfahrsperre (13) dienen,
**dass** ein Deaktivieren der Wegfahrsperre (13) durch den elektronischen Fahrzeugschlüssel (1) nur dann möglich ist, wenn das "Guthaben" auf dem Mobilitätskonto (7) einen vorgegebenen Kontostand noch nicht erreicht hat,
wobei die Funkempfangseinrichtung (5) von der Schlüssel-Steuerungseinrichtung (6) nur bedarfsweise aktiviert wird,
wobei die Funkempfangseinrichtung (5) von der Schlüssel-Steuerungseinrichtung (6) aktiviert wird, wenn das "Guthaben" auf dem Mobilitätskonto (7) einen vorgegebenen Min-Kontostand erreicht hat.

2. Elektronischer Fahrzeugschlüssel (1) mit Fahrzeug-Kommunikationseinrichtung (10) nach Anspruch 1,
**dadurch gekennzeichnet,**
**dass** wenn das "Guthaben" auf dem Mobilitätskonto (7) einen vorgegebenen Kontostand erreicht hat, eine Aktivierung der fahrzeugseitigen Wegfahrsperre (13) durch den elektronischen Fahrzeugschlüssel (1) erfolgt.

3. Elektronischer Fahrzeugschlüssel (1) mit Fahrzeug-Kommunikationseinrichtung (10) nach Anspruch 1,
**dadurch gekennzeichnet,**
**dass** die Schlüssel-Steuerungseinrichtung (6) regelmäßig ein Nutzungsfreigabesignal an das zugehörige Fahrzeug (2) überträgt solange das "Guthaben" auf dem Mobilitätskonto (7) einen vorgegebenen Kontostand noch nicht erreicht hat,
wobei bei Ausbleiben des Nutzungsfreigabesignals eine Deaktivierung der fahrzeugseitigen Wegfahrsperre (13) nicht mehr möglich ist.

4. Elektronischer Fahrzeugschlüssel mit Fahrzeug-Kommunikationseinrichtung (10) nach Anspruch 3,
**dadurch gekennzeichnet,**
**dass** bei Ausbleiben des Nutzungsfreigabesignals die fahrzeugseitige Wegfahrsperre (13) aktiviert wird.

5. Elektronischer Fahrzeugschlüssel (1) mit Fahrzeug-Kommunikationseinrichtung (10) nach einem der Ansprüche 1 oder 3,
**dadurch gekennzeichnet,**
**dass** mindestens eine Erkennungseinrichtung (9; 11)zum Erkennen von relevanten Ereignissen vorgesehen ist, wobei die relevanten Ereignisse von der mindestens einen Erkennungseinrichtung (9; 11) an die Schlüssel-Steuerungseinrichtung (6) übertragen werden.

6. Elektronischer Fahrzeugschlüssel (1) mit Fahrzeug-Kommunikationseinrichtung (10) nach Anspruch 5,
**dadurch gekennzeichnet,**
**dass** eine erste Erkennungseinrichtung (7) im elektronischen Fahrzeugschlüssel (1) angeordnet ist.

7. Elektronischer Fahrzeugschlüssel (1) mit Fahrzeug-Kommunikationseinrichtung (10) nach Anspruch 5,
**dadurch gekennzeichnet,**
**dass** eine zweite Erkennungseinrichtung (11) im zugehörigen Fahrzeug (2) angeordnet ist, wobei die relevanten Ereignisse von der zweiten Erkennungseinrichtung (11) über die Fahrzeug-Kommunikationseinrichtung (10) und die Schlüssel-Kommunikationseinrichtung (8) an die Schlüssel-Steuerungseinrichtung (6) übertragen werden.

8. Elektronischer Fahrzeugschlüssel (1) mit Fahrzeug-Kommunikationseinrichtung (10) nach einem der vorangehenden Ansprüche,
**dadurch gekennzeichnet,**
**dass** die nutzungsfreigebende Funkrufinformationen einen bestimmten Zeitpunkt enthalten und dass ein Deaktivieren der Wegfahrsperre (13) durch den elektronischen Fahrzeugschlüssel (1) nur dann möglich ist, wenn der als "Max-Guthaben" verbuchte bestimmte Zeitpunkt noch nicht überschritten wurde.

9. Elektronischer Fahrzeugschlüssel (1) mit Fahrzeug-Kommunikationseinrichtung (10) nach Anspruch 8,
**dadurch gekennzeichnet,**
**dass** bei Ablauf des als "Max-Guthaben" auf dem Mobilitätskonto (7) verbuchten bestimmten Zeitpunkts die fahrzeugseitige Wegfahrsperre (13) aktiviert wird.

10. Elektronischer Fahrzeugschlüssel (1) mit Fahrzeug-Kommunikationseinrichtung (10) nach einem der vorhergehenden Ansprüche,
**dadurch gekennzeichnet,**
**dass** die Funkempfangseinrichtung (5) von der Schlüssel-Steuerungseinrichtung (6) zu vorgegebenen Zeitpunkten aktiviert wird.

11. Elektronischer Fahrzeugschlüssel (1) mit Fahrzeug-Kommunikationseinrichtung (10) nach einem der vorhergehenden Ansprüche,
**dadurch gekennzeichnet,**
**dass** die Schlüssel-Steuerungseinrichtung (6) die Funkempfangseinrichtung (5) regelmäßig aktiviert, um festzustellen, ob in einem Aufenthaltsraum Funkrufinformationen empfangen werden können, wobei bei einem erkannten "Funkloch" die Funkempfangseinrichtung (5) solange aktiviert bleibt bis wieder Funkrufinformationen in dem Aufenthaltsraum empfangen werden können.

12. Elektronischer Fahrzeugschlüssel (1) mit Fahrzeug-Kommunikationseinrichtung (10) nach einem der vorhergehenden Ansprüche,
**dadurch gekennzeichnet,**
**dass** mindestens eine optische und/oder akustische Anzeigeeinrichtung vorgesehen ist, welche einem Nutzer mitteilt, dass das "Guthaben" auf dem Mobilitätskonto (7) den vorgegebenen Min-Kontostand erreicht hat und/oder dass ein "Funkloch" erkannt wurde.

13. Elektronischer Fahrzeugschlüssel (1) mit Fahrzeug-Kommunikationseinrichtung (10) nach einem der vorangehenden Ansprüche,
**dadurch gekennzeichnet,**
**dass** die Zentrale (4) nutzungssperrende Funkrufinformationen aussendet, wodurch eine weitere Nutzung des Fahrzeugs (2) verhindert wird, selbst wenn das "Guthaben" auf dem Mobilitätskonto (7) einen vorgegebenen Kontostand noch nicht erreicht hat.

14. Elektronischer Fahrzeugschlüssel (1) mit Fahrzeug-Kommunikationseinrichtung (10) nach Anspruch 8,
**dadurch gekennzeichnet,**
**dass** die Zentrale (4) nutzungssperrende Funkrufinformationen aussendet, wodurch eine weitere Nutzung des Fahrzeugs (2) verhindert wird, selbst wenn der als "Max-Guthaben" auf dem Mobilitätskonto (7) verbuchte bestimmte Zeitpunkt noch nicht überschritten wurde.

## Claims

1. Electronic vehicle key (1) with vehicle communication device (10), with which the electronic vehicle key is provided with
- a radio reception device (5) for reception of radio call information which is sent out by a central unit (4),
- a key communication device (8) for communication with the vehicle communication device (10) in the attendant vehicle (2),
where in the electronic vehicle key (1) a key control device (6) is provided, which keeps a mobility account (7), in which radio call information giving release for use, sent out by the central unit (4), is booked on the mobility account (7) and in which relevant events are booked as a "debit" on the mobility account (7)
**characterised by** the fact
that the signals sent out by the key communication device (8) to the vehicle communication device (10) are used for activation or de-activation of a drive-away lock (13) in the vehicle, that a de-activation of the drive-away lock (13) by the electronic vehicle key (1) is only possible
when the "credit" on the mobility account (7) has not yet reached a preset state of account,
where the radio reception device (5) is only activated by the key control device (6) when required,
where the radio reception device (5) is activated by the key control device (6) when the "credit" on the mobility account (7) has reached a preset min, state of account.

2. Electronic vehicle key (1) with vehicle communication device (10) as per claim 1,
**characterised by** the fact
that when the "credit" on the mobility account (7) has reached a preset state of account, an activation of the drive-away lock ( 13) in the vehicle by the electronic vehicle key (1) occurs.

3. Electronic vehicle key (1) with vehicle communication device (10) as per claim 1,
**characterised by** the fact
that the key control device (6) regularly transmits a signal of release for use to the attendant vehicle (2) so long as the "credit" on the mobility account (7) has not yet reached a preset state of account,
where with the absence of the signal of release for use a de-activation of the drive-away lock (13) in the vehicle is no longer possible.

4. Electronic vehicle key with vehicle communication device (10) as per claim 3,
**characterised by** the fact
that with the absence of the signal of release for use the drive-away lock (13) in the vehicle is activated.

5. Electronic vehicle key (1) with vehicle communication device (10) as per one of the claims 1 or 3,
**characterised by** the fact
that at least one recognition device (9; 11) is provided for recognition of relevant events, with the relevant events being transmitted by at least one recognition device (9; 11) to the key control device (6).

6. Electronic vehicle key (1) with vehicle communication device (10) as per claim 5,
**characterised by** the fact
that a first recognition device (7) is fitted in the electronic vehicle key (1).

7. Electronic vehicle key (1) with vehicle communication device (10) as per claim 5,
**characterised by** the fact
that a second recognition device (11) is fitted in the attendant vehicle (2), with the relevant events being transmitted by the second recognition device (11) via the vehicle communication device (10) and the key communication device (8) to the key control device (6).

8. Electronic vehicle key (1) with vehicle communication device (10) as per one of the foregoing claims,
**characterised by** the fact
that the radio call information giving release for use contains a certain point in time and that a de-activation of the drive-away lock (13) by the electronic vehicle key (1) is only possible if the definite time booked as "max. credit" has not yet been exceeded.

9. Electronic vehicle key (1) with vehicle communication device (10) as per claim 8,
**characterised by** the fact
that on expiry of the definite time booked as "max. credit" on the mobility account (7) the drive-away lock (13) in the vehicle is activated.

10. Electronic vehicle key (1) with vehicle communication device (10) as per one of the foregoing claims,
**characterised by** the fact
that the radio reception device (5) is activated by the key control device (6) at preset times.

11. Electronic vehicle key (1) with vehicle communication device (10) as per one of the foregoing claims,
**characterised by** the fact
that the key control device (6) regularly activates the radio reception device (5) in order to establish whether in a stopping area radio call information can be received, where with a recognised "radio hole" the radio reception device (5) remains activated so long as until radio call information can again be received in the stopping area.

12. Electronic vehicle key (1) with vehicle communication device (10) as per one of the foregoing claims,
**characterised by** the fact
that at least one optical and/or acoustic means of indication is provided, which reports to a user that the "credit" on the mobility account (7) has reached the preset min. state of account and/or that a "radio hole" was recognised.

13. Electronic vehicle key (1) with vehicle communication device (10) as per one of the foregoing claims,
**characterised by** the fact
that the central unit (4) sends out radio call information locking out use, through which a further used of the vehicle (2) is prevented even if the "credit" on the mobility account (7) has not yet reached a preset state of account.

14. Electronic vehicle key (1) with vehicle communication device (10) as per claim 8,
**characterised by** the fact
that the central unit (4) sends out radio call information locking out use, through which a further use of the vehicle (2) is prevented even if the definite time booked as "max. credit" on the mobility account (7) even if the definite time has not yet been exceeded,

## Revendications

1. Clé électronique pour véhicule (1) avec dispositif de communication dans le véhicule (10), dans laquelle la clé électronique pour véhicule (1) est prévue avec
- un dispositif de réception radio (5) pour recevoir des informations d'appel radio, lesquelles sont envoyées par une centrale (4),
- un dispositif de communication dans la clé (8) pour la communication avec le dispositif de communication dans le véhicule (10) placé dans le véhicule correspondant,
moyennant quoi est prévu dans la clé électronique de véhicule (1) un dispositif de commande dans la clé (6), qui gère un compte de mobilité (7), dans laquelle des informations d'appel radio libérant une exploitation envoyées par la centrale (4) sont comptabilisées comme « crédit maximal » sur le compte de mobilité (7) et dans laquelle des événements importants sont comptabilisés comme un « prélèvement » sur le compte de mobilité (7),
**caractérisée en ce que** les signaux envoyés par le dispositif de communication dans la clé (8) au dispositif de communication dans le véhicule (10) servent à activer ou à désactiver un dispositif d'antidémarrage (13) installé dans le véhicule,
**en ce que** le fait de désactiver le dispositif d'antidémarrage (13) grâce à la clé électronique pour véhicule n'est possible que si le « crédit » sur le compte de mobilité (7) n'a pas encore atteint un niveau de compte prescrit,
dans laquelle le dispositif de réception radio (5) n'est activé par le dispositif de commande de la clé (6) que selon le besoin,
dans laquelle le dispositif de réception radio (5) est activé par le dispositif de commande de la clé (6) lorsque le « crédit » sur le compte de mobilité (7) a atteint un niveau de compte minimal.

2. Clé électronique pour véhicule (1) avec dispositif de communication dans le véhicule (10) selon la revendication 1, **caractérisée en ce que**, lorsque le « crédit » sur le compte de mobilité (7) a atteint un niveau prescrit, une activation du dispositif d'antidémarrage (13) installé dans le véhicule s'effectue grâce à la clé électronique pour véhicule (1).

3. Clé électronique pour véhicule (1) avec dispositif de communication dans le véhicule (10) selon la revendication 1, **caractérisée en ce que** le dispositif de commande de la clé (6) transmet régulièrement un signal de libération d'exploitation au véhicule correspondant (2) tant que le « crédit » sur le compte de mobilité (7) n'a pas encore atteint un niveau prescrit,
dans laquelle une désactivation du dispositif d'antidémarrage (13) installé dans le véhicule n'est plus possible lorsqu'il n'y a pas de signal de libération d'exploitation.

4. Clé électronique pour véhicule avec dispositif de communication dans le véhicule (10) selon la revendication 3, **caractérisée en ce que**, lorsqu'il n'y a pas de signal de libération d'exploitation, le dispositif d'antidémarrage (13) installé dans le véhicule est activé.

5. Clé électronique pour véhicule (1) avec dispositif de communication dans le véhicule (10) selon l'une quelconque des revendications 1 ou 3, **caractérisée en ce qu'**est prévu au moins un dispositif de reconnaissance (9 ; 11) pour la reconnaissance d'événements importants, dans laquelle les événements importants sont transmis par au moins un des dispositifs de reconnaissance (9 ; 11) au dispositif de commande de clé (6).

6. Clé électronique pour véhicule (1) avec dispositif de communication dans le véhicule (10) selon la revendication 5, **caractérisée en ce qu'**un premier dispositif de reconnaissance (7) est placé dans la clé électronique pour véhicule (1).

7. Clé électronique pour véhicule (1) avec dispositif de communication dans le véhicule (10) selon la revendication 5, **caractérisée en ce qu'**un deuxième dispositif de reconnaissance (11) est placé dans le véhicule (2) correspondant, dans laquelle les événements importants sont transmis du deuxième dispositif de reconnaissance (11) par le dispositif de communication dans le véhicule (10) et le dispositif de communication dans la clé (8) au dispositif de commande de la clé (6).

8. Clé électronique pour véhicule (1) avec dispositif de communication dans le véhicule (10) selon l'une quelconque des revendications précédentes, **caractérisée en ce que** les informations d'appel radio libérant l'exploitation contiennent un certain moment dans le temps et qu'une désactivation du dispositif d'antidémarrage (13) par la clé électronique pour véhicule (1) n'est possible que lorsque ce certain moment dans le temps comptabilisé comme « crédit maximal » n'a pas encore été dépassé.

9. Clé électronique pour véhicule (1) avec dispositif de communication dans le véhicule (10) selon la revendication 8, **caractérisée en ce que** le dispositif d'antidémarrage (13) côté véhicule est activé lorsque ce certain moment dans le temps comptabilisé comme « crédit maximal » sur le compte de mobilité (7) s'est écoulé.

10. Clé électronique pour véhicule (1) avec dispositif de communication dans le véhicule (10) selon l'une quelconque des revendications précédentes, **caractérisée en ce que** le dispositif de réception radio (5) est activé par le dispositif de commande de la clé (6) à des moments précis dans le temps.

11. Clé électronique pour véhicule (1) avec dispositif de communication dans le véhicule (10) selon l'une quelconque des revendications précédentes, **caractérisée en ce que** le dispositif de commande de la clé (6) active régulièrement le dispositif de réception radio (5) pour repérer si, dans un lieu de résidence, des informations d'appel radio peuvent être reçues, dans laquelle, en cas de « trou radio » détecté, le dispositif de réception radio (5) reste activé tant que des informations d'appel radio peuvent de nouveau être reçues sur le lieu de résidence.

12. Clé électronique pour véhicule (1) avec dispositif de communication dans le véhicule (10) selon l'une quelconque des revendications précédentes, **caractérisée en ce qu'**est prévu au moins un dispositif d'affichage optique et/ou acoustique qui indique à un utilisateur que le « crédit » sur le compte de mobilité (7) a atteint le niveau minimal prescrit et/ou qu'un « trou radio » a été détecté.

13. Clé électronique pour véhicule (1) avec dispositif de communication dans le véhicule (10) selon l'une quelconque des revendications précédentes, **caractérisée en ce que** la centrale (14) envoie des informations d'appel radio verrouillant l'exploitation, ce qui empêche une autre exploitation du véhicule (2) même lorsque le « crédit » sur le compte de mobilité (7) n'a pas encore atteint un niveau prescrit.

14. Clé électronique pour véhicule (1) avec dispositif de communication dans le véhicule (10) selon la revendication 8, **caractérisée en ce que** la centrale (4) envoie des informations d'appel radio verrouillant l'exploitation, ce qui empêche une autre exploitation du véhicule (2), même lorsque le « crédit maximal » sur le compte de mobilité (7) n'a pas encore dépassé le moment dans le temps comptabilisé.
